# EUROPEAN PATENT APPLICATION

(11) **EP 3 875 721 A1**
(43) Date of publication of application: **08.09.2021**
(21) Application number: 19879406.7
(22) Date of filing: 30.10.2019
(51) Int. Cl.: E05F 15/622, B60J 5/10

(54) **OBJECT MOVING MECHANISM**

(30) Priority: 31.10.2018 JP 2018205624
(71) Applicant: HI-LEX Corporation, Takarazuka-shi, Hyogo 665-0845 (JP)
(72) Inventor: INAGAKI, Hiroyuki, Takarazuka-shi, Hyogo 665-0845 (JP)
(74) Representative: Patentanwaltskanzlei WILHELM & BECK
(86) International application number: PCT/JP2019/042478
(87) International publication number: WO 2020/090855

(57) **Abstract**

An object moving mechanism includes: a supporting device that supports a back door; and a driving device that moves the back door. The driving device includes: a driving motor; an operating member that operates in a forward and backward direction by drive of the driving motor; and a driving-device-side energizing member that energizes the back door. The supporting device includes: the third connecting portion that connects to the operating member; a driven member that is driven by an operation of the operating member; a supporting-device-side energizing member that energizes the driven member; and a regulation mechanism that restrains or allows movement of the driven member. The regulation mechanism allows the driven member to be driven by operating force of the operating member by the drive of driving device, and restrains the driven member from being driven by movement of the operating member with energizing force of the supporting-device-side energizing member.

## Description

### Technical Field

The present invention relates to an object moving mechanism technique.

### Background Art

An object moving mechanism that moves an object such as a vehicle door moves an object by drive of a driving section. It is preferable for a moving object to be connected to a plurality of object moving devices while moving in order to maintain the posture of the moving object. The cost will increase, however, due to the use of a plurality of motors and the weight will also increase.

To solve the above problems, a power door has been proposed as described in Patent Literature 1, for example, the power door using a drive spindle as a driving device and an assist spring as a supporting device.

### Citation List

### Patent Literature

PTL 1
Japanese Patent Application Laid-Open No. 2013-104229

### Summary of Invention

### Technical Problem

Such a device, however, has a single driving device, and thus unable to maintain the posture of the door at a fully open position or a position between fully-open and fully-closed positions in some cases, depending on the type of doors or how the door is installed. This requires an attention to ensure the security during the operation of the object to be moved, hereinafter, referred to as "movement object".

The present invention is made taking into account the above-mentioned problem and aims to provide an object moving mechanism capable of restricting movement of a movement object even when drive of a driving device is stopped during movement of the object by a combination of a driving device and a supporting device.

### Solution to Problem

A technical problem of the present invention is as described above. Next, a solution to the problem will be described.

That is, an object moving device of the present invention includes: a supporting device that supports a movement object; and a driving device that moves the movement object, wherein the driving device includes: a driving section; an operating member that operates in a forward and backward direction by drive of the driving section; and a driving-device-side energizing member that energizes the movement object, and the supporting device includes: a connecting portion that connects to the operating member; a driven member that is driven by operation of the operating member; a supporting-device-side energizing member that energizes the driven member; and a regulation mechanism that restrains or allows movement of the driven member, wherein the regulation mechanism allows the driven member to be driven by operating force of the operating member by drive of the driving device, and restrains the driven member from being driven by movement of the operating member with energizing force of the supporting-device-side energizing member.

### Advantageous Effects of Invention

As an effect of the present invention, the following effect is attained.

That is, according to the object moving device of the present invention, it is possible to restrict movement of a movement object even when drive of a driving device is stopped during movement of the object by a combination of a driving device and a supporting device.

### Brief Description of Drawings

FIG. 1 is a diagram for describing a vehicle with an object moving mechanism according to an embodiment of the present invention, and schematically illustrates a side view of a rear part of the vehicle;
FIG. 2 is a diagram for describing the vehicle with the object moving mechanism according to the embodiment of the present invention, and illustrates the rear part of the vehicle from obliquely rear upward;
FIG. 3 is a diagram for describing a configuration of a driving device;
FIG. 4 is a diagram for describing a configuration of a supporting device;
FIG. 5 is a diagram for describing a configuration of a regulation mechanism in a direction of arrow X in FIG. 4; and
FIG. 6A and FIG. 6B are diagrams for describing operations of a brake spring when a driven-member-side spindle member is rotated in an axial rotation direction. FIG. 6A is a diagram illustrating a state where the driven-member-side spindle member is rotated to a predetermined side in the axial rotation direction, and FIG. 6B is a diagram illustrating a state where the driven-member-side spindle member is rotated to an opposite side to the predetermined side in the axial rotation direction.

### Description of Embodiments

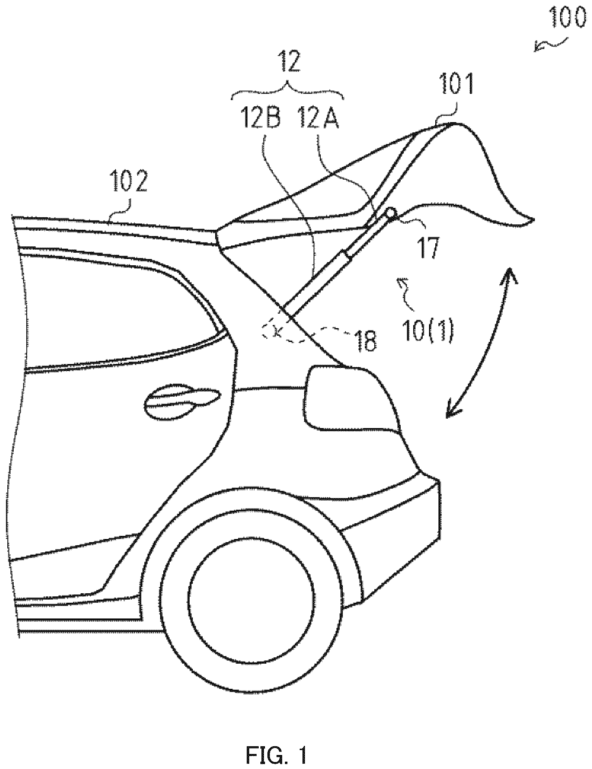

Next, object moving mechanism 1 according to an embodiment of the present invention will be described with reference to FIG. 1 to FIG. 6.

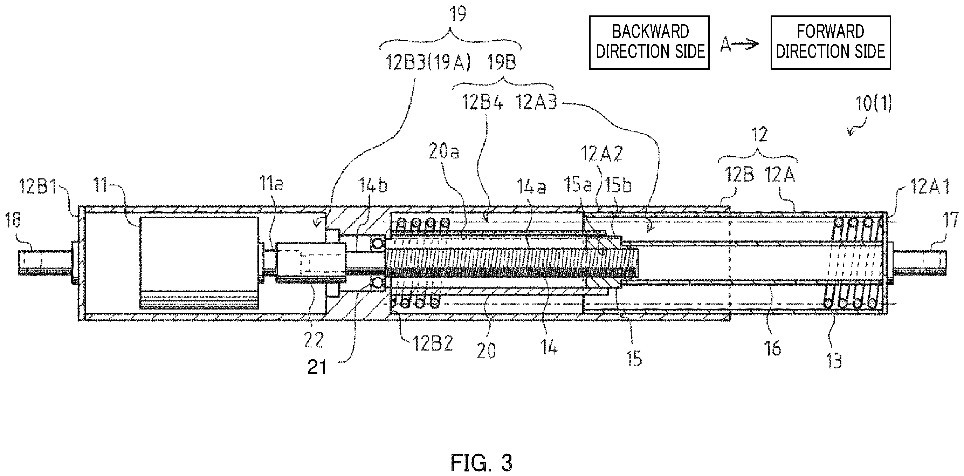

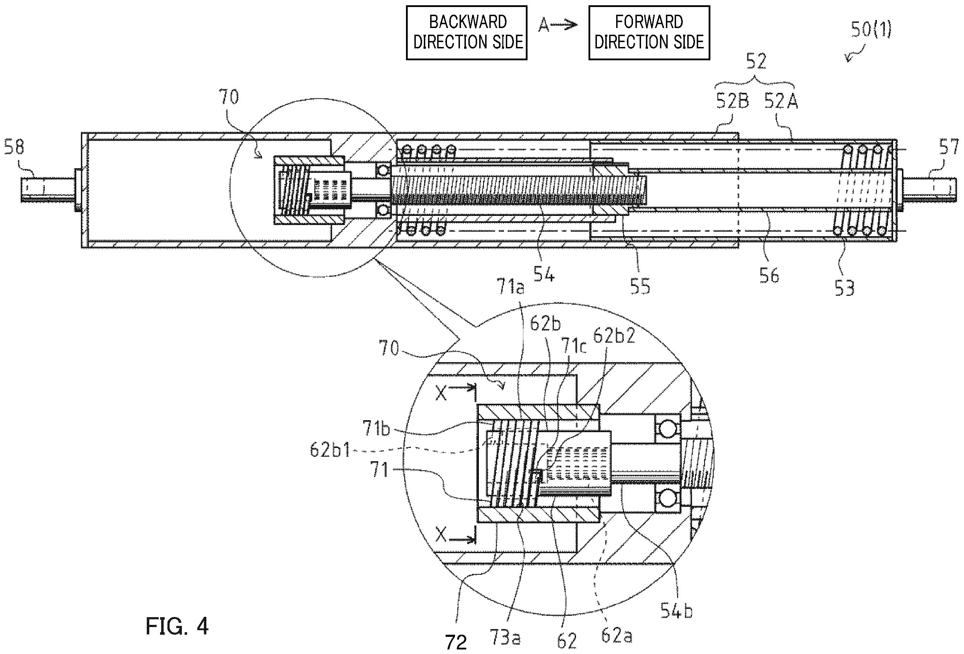

Note that, the following description is provided by defining the direction of arrow A illustrated in FIG. 3 and FIG. 4 as a forward direction of operating member 12A of driving device 10, or a forward direction of driven member 52A of supporting device 50, for convenience. The description is provided by also defining the opposite direction to the direction of arrow A as a backward direction.

### [Overall Configuration of Object Moving Mechanism 1]

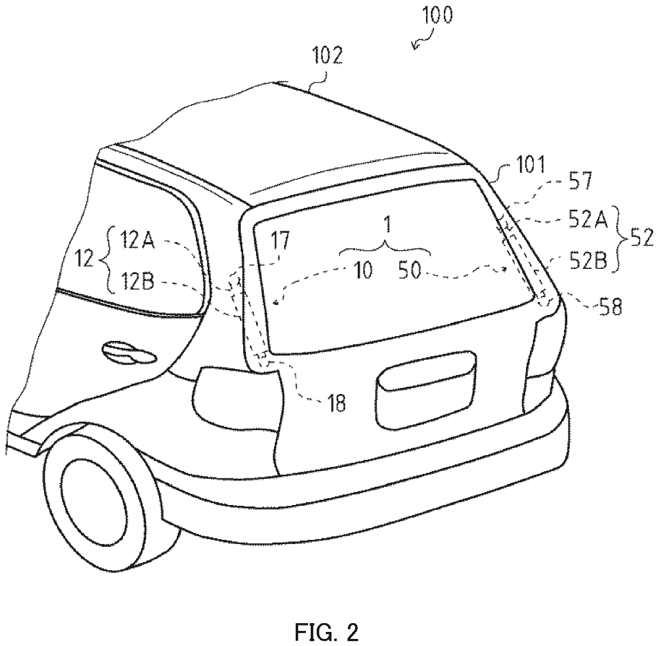

First, an overall configuration of object moving mechanism 1 will be described with reference to FIG. 1 and FIG. 2.

Object moving mechanism 1 in the present embodiment moves an object in a predetermined direction converting rotation motion by drive of a driving motor or the like to back and forth motion in a linear direction, for example.

An example of such object moving mechanism 1 is an opening/closing driving device that regards back door 101 opening and closing the rear part of vehicle 100 as a movement object, and moves (swings) back door 101 in the up-down direction.

Note that the movement object is not limited to back door 101 described above, and may include an opening/closing body that opens and closes an opening of a vehicle side surface, or an automatic opening/closing window in a housing field, for example.

That is, object moving mechanism 1 to embody the present invention is not limited to the opening/closing driving device that opens and closes back door 101 as described above, and can be applied to other devices in which an object moves by drive with support, such as a device that moves an article or a structure as a movement object in the up-down direction, the left-right direction, or the oblique direction.

Object moving mechanism 1 includes driving device 10 that mainly moves (swings) back door 101, supporting device 50 that supports back door 101 while following the moving operation of back door 101, and the like, as illustrated in FIG. 2.

Driving device 10 and supporting device 50 are configured respectively with members (specifically, operating member 12A and driven member 52A to be described later) at the end side in the longitudinal direction so that the members can move back and forth, and driving device 10 and supporting device 50 are respectively placed on one side surface and the other side surface of the rear part of vehicle 100. Details thereof will be described later.

To be more specific, back door 101 is provided at the upper end toward body 102 of vehicle 100 via a hinge or the like (not illustrated) so that back door 101 can move (swing) in the up-down direction.

In addition, driving device 10 is rotatably connected to back door 101 at one side surface of the rear part of vehicle 100 (the left side of the paper in FIG. 2 in the present embodiment). Driving device 10 is rotatably connected to body 102 via second connecting portion 18 of holding member 12B to be described later. Driving device 10 is also rotatably connected to back door 101 via first connecting portion 17 of operating member 12A moving back and forth relatively to holding member 12B.

Further, at the other side surface of the rear part of vehicle 100 (the right side of the paper in FIG. 2 in the present embodiment), supporting device 50 is rotatably connected to body 102 via fourth connecting portion 58 of holding member 52B to be described later, and also rotatably connected to back door 101 via third connecting portion 57 of driven member 52A moving back and forth relatively to holding member 52B.

In object moving mechanism 1 with such a configuration, the forward movement of operating member 12A of driving device 10, for example, pushes up back door 101 from below, and moves (swings) back door 101 upward.

When back door 101 is moved (swung) upward, driven member 52A of supporting device 50 follows back door 101 and is also moved forward while supporting back door 101.

When operating member 12A of driving device 10 moves backward, in contrast, back door 101 is pulled downward by operating member 12A or lowered by its own weight, thereby moving (swinging) downward.

When back door 101 is moved (swung) downward, driven member 52A of supporting device 50 follows the movement of back door 101 and is also moved backward while supporting back door 101.

### [Configuration of Driving Device 10]

Next, the configuration of driving device 10 will be described with reference to FIG. 3.

Driving device 10 includes driving motor 11 as an example of a driving section, operating member 12A that operates in the forward and backward direction (a direction parallel to the direction of arrow A in FIG. 3) by the drive of driving motor 11, holding member 12B that configures driving-device-side housing 12 with operating member 12A, driving-device-side energizing member 13 that energizes back door 101 (see FIG. 1) as an example of a movement object, and the like.

Further, operating member 12A includes operating-member-side spindle member 14 that rotates by the drive of driving motor 11, nut member 15 that is screwed with operating-member-side spindle member 14, moving member 16 that is connected to nut member 15, and the like.

Operating member 12A is formed of a bottomed cylindrical member with one end surface as an open surface, and closed end surface 12A1 thereof is provided with first connecting portion 17.

First connecting portion 17 may include a ball joint, for example, and is rotatably connected to an attaching member (not illustrated) provided at back door 101.

In other words, driving-device-side housing 12 composed of operating member 12A is provided with first connecting portion 17 connecting to back door 101 as a movement object.

Note that the configuration of first connecting portion 17 is not limited to the configuration directly connected to back door 101 as described in the present embodiment, and may include a configuration connected to a back door via another mechanism such as a link mechanism, for example.

Holding member 12B is formed of a bottomed cylindrical member with one end surface as an open surface, and its inner diameter is configured to be greater than the outer diameter of operating member 12A.

In addition, closed end surface 12B1 of holding member 12B is provided with second connecting portion 18. Second connecting portion 18 may include a ball joint, for example, as is the case with first connecting portion 17 described above, and is rotatably connected to an attaching member (not illustrated) provided at the rear part of vehicle 100 (see FIG. 1).

Note that the configuration of second connecting portion 18 is also not limited to the configuration directly connected to the rear part of vehicle 100 as described in the present embodiment, and may include a configuration connected to the rear part of vehicle 100 via another mechanism such as a link mechanism, for example.

Further, operating member 12A and holding member 12B are coaxially placed, and operating member 12A is configured to be relatively movable to holding member 12B in the axial direction inside holding member 12B.

To be more specific, operating member 12A is placed in a state where closed end surface 12A1 faces the forward direction side (the direction of arrow A in FIG. 3) and the end surface as an open surface faces the holding member 12B side.

Meanwhile, holding member 12B is placed in a state where closed end surface 12B1 faces the backward direction side and the end surface as an open surface faces the operating member 12A side.

In addition, end portion 12A2 on the open surface side of operating member 12A is inserted inside holding member 12B via the open surface of holding member 12B. Operating member 12A is fitted to holding member 12B in a relatively movable manner.

Driving-device-side housing 12 is configured with operating member 12A and holding member 12B with such configurations.

Incidentally, the inner space of holding member 12B is divided into two space portions by partition portion 12B2 provided parallel to closed end surface 12B1. One of the portions is closed-end-surface-side space portion 12B3 that is placed on the closed end surface 12B1 side, and the other portion is open-surface-side space portion 12B4 that is provided on the open surface side.

Additionally, inner space portion 12A3 of operating member 12A is in a state of communicating with open-surface-side space portion 12B4 of holding member 12B by end portion 12A2 of operating member 12A being inserted inside holding member 12B.

As described above, space portion 19 is defined by operating member 12A and holding member 12B with respect to the outside of driving-device-side housing 12, and is configured with first space portion 19A composed of closed-end-surface-side space portion 12B3, and second space portion 19B composed of open-surface-side space portion 12B4 and inner space portion 12A3.

Incidentally, in first space portion 19A of driving-device-side housing 12, driving motor 11 is placed in a state where driving shaft 11a faces the operating member 12A side (the forward direction side).

That is, driving motor 11 is provided in driving-device-side housing 12 (more specifically, in closed-end-surface-side space portion 12B3 of holding member 12B).

In second space portion 19B of driving-device-side housing 12, in contrast, driving-device-side energizing member 13 as well as operating-member-side spindle member 14, nut member 15, and moving member 16 included in operating member 12A, for example, are placed as described later, and hollow cylindrical rotation regulation member 20 that regulates the rotating operation of nut member 15 is also coaxially placed with holding member 12B.

Note that the volume of second space portion 19B is changed according to the movement of operating member 12A in the forward and backward direction with respect to holding member 12B.

To be more specific, second space portion 19B has the maximum volume in a state where operating member 12A protrudes the most to the forward direction side with respect to holding member 12B. In contrast, second space portion 19B has the minimum volume in a state where operating member 12A is pulled in the most to the backward direction side with respect to holding member 12B.

Driving-device-side energizing member 13 is configured with an elastic member composed of a coil spring, for example, and the inner diameter of driving-device-side energizing member 13 is configured to be sufficiently greater than the outer diameters of rotation regulation member 20 and moving member 16, while its outer diameter is configured to be smaller than the inner diameter of operating member 12A.

In addition, driving-device-side energizing member 13 is coaxially placed with operating member 12A (or holding member 12B) in second space portion 19B.

Further, driving-device-side energizing member 13 makes contact with closed end surface 12A1 of operating member 12A at one end portion (the end portion on the forward direction side in the present embodiment), and makes another contact with partition portion 12B2 of holding member 12B at the other end portion (the end portion on the backward direction side in the present embodiment).

This causes operating member 12A to be always energized by driving-device-side energizing member 13 so as to move to the forward direction side in the axial direction with respect to holding member 12B.

Note that one end portion of driving-device-side energizing member 13 may be fixed to closed end surface 12A1 of operating member 12A, and the other end portion may be fixed to partition portion 12B2 of holding member 12B so as to generate the predetermined energizing force in the axial direction.

Operating-member-side spindle member 14 is composed of a round-rod-shaped member, and its outer peripheral surface is provided with protruding external thread portion 14a spirally formed toward the axial direction.

Operating-member-side spindle member 14 is placed in second space portion 19B coaxially with driving shaft 11a of driving motor 11 and also radially inside driving-device-side energizing member 13.

Further, operating-member-side spindle member 14 is rotatably supported in the axial rotation direction at end portion 14b on the backward direction side, via bearing member 21 fixed to partition portion 12B2.

In addition, operating-member-side spindle member 14 is connected to driving shaft 11a of driving motor 11 at the tip of end portion 14b, via commercially available coupling 22.

This enables operating-member-side spindle member 14 to rotate in the axial rotation direction by the drive of driving motor 11 when power is supplied to driving motor 11 based on a control signal from a control section (not illustrated).

Note that operating-member-side spindle member 14 is not limited to be configured to be directly connected to driving shaft 11a of driving motor 11 via coupling 22 as described in the present embodiment, and may be configured to be connected to driving shaft 11a of driving motor 11 via a speed reduction mechanism, for example.

Nut member 15 is composed of a hollow member, and its inner peripheral surface is provided with internal thread portion 15a spirally formed toward the axial direction.

Further, nut member 15 is fixed to moving member 16, which will be described later, at the end portion on the forward direction side in the axial direction.

In addition, nut member 15 is coaxially placed with operating-member-side spindle member 14 on the outer peripheral surface of operating-member-side spindle member 14, and also screwed with external thread portion 14a of operating-member-side spindle member 14 via internal thread portion 15a.

This causes nut member 15 to be relatively rotated to operating-member-side spindle member 14 when operating-member-side spindle member 14 is rotated in the axial rotation direction by the drive of driving motor 11, and thus nut member 15 moves to the axial direction of operating-member-side spindle member 14 with moving member 16.

To be more specific, nut member 15 moves to the forward direction side in the axial direction of operating-member-side spindle member 14 when operating-member-side spindle member 14 is rotated to the predetermined side in the axial rotation direction.

In contrast, nut member 15 moves to the backward direction side in the axial direction of operating-member-side spindle member 14 when operating-member-side spindle member 14 is rotated to the opposite side to the predetermined side in the axial rotation direction.

Incidentally, open-surface-side space portion 12B4 of holding member 12B described above is provided with rotation regulation member 20 composed of a hollow cylindrical member.

Rotation regulation member 20 is placed radially outside operating-member-side spindle member 14, coaxially with operating-member-side spindle member 14 and also radially inside driving-device-side energizing member 13.

In addition, rotation regulation member 20 is fixed to partition portion 12B2 of holding member 12B at the end portion on the backward direction side.

The inner peripheral surface of rotation regulation member 20 is formed with recess portion 20a extending in the axial direction.

Meanwhile, the outer peripheral surface of nut member 15 is formed with protrusion portion 15b that can be fitted to recess portion 20a.

Thus, protrusion portion 15b is fitted to recess portion 20a of rotation regulation member 20 and also nut member 15 is slidable in the axial direction of operating-member-side spindle member 14 with respect to rotation regulation member 20, in a state where nut member 15 is screwed with operating-member-side spindle member 14.

This enables to regulate the rotation of nut member 15 in the axial rotation direction accompanying the rotation of operating-member-side spindle member 14 in the axial rotation direction, and to certainly move nut member 15 along the axial direction of operating-member-side spindle member 14.

Note that the configuration of rotation regulation member 20 is not limited to the configuration described in the present embodiment. For example, the inner peripheral surface of rotation regulation member 20 may be formed with a protrusion portion extending in the axial direction, and the outer peripheral surface of nut member 15 may be formed with a recess portion that can fit to the protrusion portion. Nut member 15 may also have a polygonal cross section, and the inner peripheral surface of rotation regulation member 20 may be provided with a portion that makes contact with a part of the outer peripheral surface of nut member 15. This yields a configuration that regulates the rotation of nut member 15 accompanying operating-member-side spindle member 14.

That is, the configuration of rotation regulation member 20 may be any configurations that can regulate the rotation of nut member 15 accompanying operating-member-side spindle member 14, and that does not hinder the movement of nut member 15.

Moving member 16 is formed of a hollow cylindrical member and is placed in inner space portion 12A3 of operating member 12A, coaxially with operating-member-side spindle member 14 and also radially inside driving-device-side energizing member 13.

Further, moving member 16 is fixed to closed end surface 12B1 of operating member 12A at one end portion (the end portion on the forward direction side), and fixed to nut member 15 at the other end portion (the end portion on the backward direction side).

Thus, when nut member 15 moves to the axial direction of operating-member-side spindle member 14 accompanying the rotation of operating-member-side spindle member 14, moving member 16 and operating member 12A also integrally move with nut member 15 in the axial direction.

To be more specific, when operating-member-side spindle member 14 rotates to the predetermined side in the axial rotation direction, nut member 15, moving member 16, and operating member 12A integrally move to the forward direction side in the axial direction of operating-member-side spindle member 14.

In addition, when operating-member-side spindle member 14 rotates to the opposite side to the predetermined side in the axial rotation direction, nut member 15, moving member 16, and operating member 12A integrally move to the backward direction side in the axial direction of operating-member-side spindle member 14.

Incidentally, as described above, second space portion 19B of driving-device-side housing 12 is provided with driving-device-side energizing member 13, and operating member 12A is in a state of always being energized by driving-device-side energizing member 13 to the forward direction side in the axial direction of operating-member-side spindle member 14 with respect to holding member 12B.

The energizing force applied to operating member 12A by driving-device-side energizing member 13 is transferred to nut member 15 via moving member 16.

This causes nut member 15 in a state of always being energized by driving-device-side energizing member 13 to the forward direction side in the axial direction of operating-member-side spindle member 14 with respect to holding member 12B.

Such a configuration not only reduces the driving force of driving motor 11 by driving-device-side energizing member 13, but also reduces the looseness generating between external thread portion 14a of operating-member-side spindle member 14 and internal thread portion 15a of nut member 15 as much as possible, and transfers the drive of driving motor 11 to nut member 15 more effectively via operating-member-side spindle member 14.

Further, when operating member 12A is stopped during moving in the forward and backward direction, the rotation of operating-member-side spindle member 14 is regulated by nut member 15, and the drive of driving motor 11 is stopped.

The mechanical structure of the stopped driving motor 11 locks the rotation movement of driving shaft 11a.

When, in such a state, the external force to move operating member 12A is unexpectedly applied to operating member 12A to the backward direction side in the axial direction of operating-member-side spindle member 14 with respect to holding member 12B, for example, the force to rotate operating-member-side spindle member 14 acts via nut member 15, and the force to rotate against the locked state acts on driving shaft 11a of driving motor 11.

In the present embodiment, however, operating member 12A is always energized to the forward direction side in the axial direction of operating-member-side spindle member 14 by driving-device-side energizing member 13, thereby restricting the force to rotate driving shaft 11a against the locked state, and reducing a load to be applied to driving motor 11.

Further, as described above, the present embodiment employs the mechanism of moving (swinging) back door 101(see FIG. 1) as a movement object upward by moving operating member 12A to the forward direction side in the axial direction of operating-member-side spindle member 14 with respect to holding member 12B.

Thus, the energizing force of driving-device-side energizing member 13 can reduce a load of back door 101 due to its own weight, and the driving force required for driving motor 11 can be set lower.

### [Configuration of Supporting Device 50]

Next, the configuration of supporting device 50 will be described with reference to FIG. 4 to FIG. 6.

Although supporting device 50 has substantially the same configuration as that of driving device 10, it is different from driving device 10 in the point that supporting device 50 is not provided with the driving mechanism composed of driving motor 11 and coupling 22 (see FIG. 3), and is provided with regulation mechanism 70.

Thus, the difference from driving device 10 described above will be mainly described hereinafter, and the descriptions of the similar configuration to that of driving device 10 will be omitted.

As illustrated in FIG. 4, supporting device 50 includes a connecting portion (third connecting portion 57, more specifically) that connects to operating member 12A (see FIG. 3) of driving device 10 via back door 101 (see FIG. 1) as a movement object, driven member 52A that is driven by the operation of operating member 12A, holding member 52B that configures supporting-device-side housing 52 with driven member 52A, supporting-device-side energizing member 53 that energizes driven member 52A, regulation mechanism 70 that restrains or allows the movement of driven member 52A, and the like.

Further, driven member 52A includes driven-member-side spindle member 54 that is rotatable in the axial rotation direction, nut member 55 that is screwed with driven-member-side spindle member 54, moving member 56 that is connected to nut member 55, and the like.

Note that third connecting portion 57, driven member 52A, supporting-device-side housing 52, holding member 52B, supporting-device-side energizing member 53, driven-member-side spindle member 54, nut member 55, and moving member 56 described above have substantially the same configurations as those of first connecting portion 17, operating member 12A, driving-device-side housing 12, holding member 12B, driving-device-side energizing member 13, operating-member-side spindle member 14, nut member 15, and moving member 16 of driving device 10 accordingly. Thus, descriptions of the configurations thereof will be omitted hereinafter.

Driven member 52A is provided with third connecting portion 57, and third connecting portion 57 is rotatably connected to an attaching member (not illustrated) provided at back door 101.

In other words, supporting-device-side housing 52 composed of driven member 52A is provided with third connecting portion 57 connecting to back door 101 as a movement object.

Note that the configuration of third connecting portion 57 is not limited to the configuration directly connected to back door 101 as described in the present embodiment, and may include a configuration connected to a back door via another mechanism such as a link mechanism, for example.

In addition, holding member 52B is provided with fourth connecting portion 58, and fourth connecting portion 58 is rotatably connected to an attaching member (not illustrated) provided at the rear part of vehicle 100 (see FIG. 1).

Note that the configuration of fourth connecting portion 58 is also not limited to the configuration directly connected to the rear part of vehicle 100 as described in the present embodiment, and may include a configuration connected to the rear part of vehicle 100 via another mechanism such as a link mechanism, for example.

Driven-member-side spindle member 54 is provided with rotating member 62 that rotates with driven-member-side spindle member 54 in the axial rotation direction of driven-member-side spindle member 54.

Rotating member 62 is formed of a hollow cylindrical member, and coaxially provided with through-hole 62a that has a shape fitting to end portion 54b of driven-member-side spindle member 54 at one end (the end portion on the forward direction side in the present embodiment).

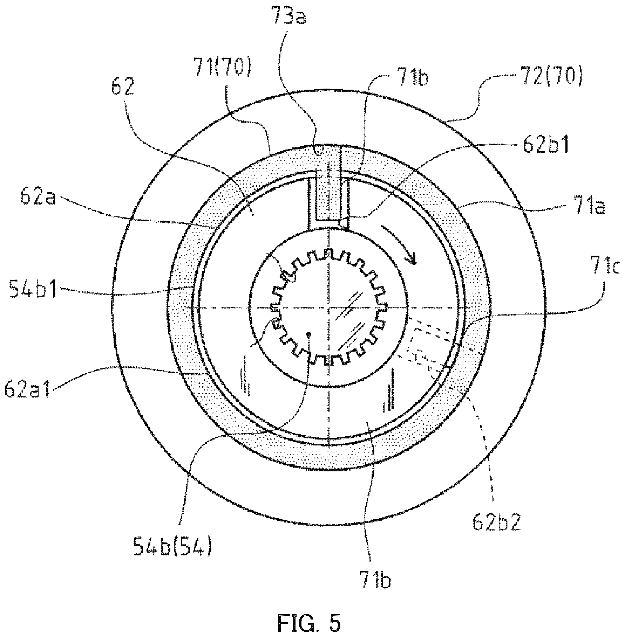

Incidentally, the outer peripheral surface of the tip part of end portion 54b of driven-member-side spindle member 54 is formed with a plurality of protrusion portions 54b1 (see FIG. 5) that extend in the axial direction of driven-member-side spindle member 54.

The inner peripheral surface of through-hole 62a of rotating member 62, in contrast, is formed with a plurality of recess portions 62a1 (see FIG. 5) that extend in the axial direction of rotating member 62 and can be fitted to the plurality of protrusion portions 54b1.

The relative rotation of rotating member 62 to driven-member-side spindle member 54 is then restricted in a state where recess portions 62a1 of through-hole 62a and protrusion portions 54b1 of end portion 54b are fitted each other by end portion 54b of driven-member-side spindle member 54 being inserted into through-hole 62 of rotating member 62.

Outer peripheral surface 62b of rotating member 62 is formed with first groove portion 62b1 and second groove portion 62b2 that respectively hold first arm portion 71b and second arm portion 71c of brake spring 71, which will be described later.

First groove portion 62b1 is formed at the tip part of the other end (on the backward direction side in the present embodiment) of rotating member 62 so as to extend radially inside rotating member 62.

Additionally, second groove portion 62b2 is formed at a position slightly apart from first groove portion 62b1 to the side of through-hole 62a described above (the forward direction side in the present embodiment) so as to extend radially inside rotating member 62.

Further, first groove portion 62b1 and second groove portion 62b2 are provided at mutually different angular positions in the axial rotation direction of rotating member 62 as illustrated in FIG. 5.

In addition, the inner volumes of first groove portion 62b1 and second groove portion 62b2 are configured to be slightly larger than first arm portion 71b and second arm portion 71c of brake spring 71 so as to each form a gap, and this yields a configuration that rotating member 62 is slightly rotatable in the axial rotation direction of rotating member 62 relative to brake spring 71, which will be described later.

Regulation mechanism 70 is mainly configured with brake spring 71, outer member 72, and the like.

Brake spring 71 is formed of a so-called torsion coil spring, and configured with barrel portion 71a formed of a closely coiled spring part, first arm portion 71b and second arm portion 71c each extending radially inside barrel portion 71a from both end portions of barrel portion 71a, as illustrated in FIG. 4.

In addition, brake spring 71 is configured to generate braking force by increasing or decreasing the frictional force to rotating member 62 with an increase or a decrease in the inner diameter (hereinafter, may be referred to as "diameter enlargement" or "diameter reduction") of barrel portion 71a, as described later.

Herein, the inner diameter of barrel portion 71a is configured to be slightly larger than the outer diameter of rotating member 62.

Additionally, the outer diameter of barrel portion 71a is configured to be substantially the same as the inner diameter of outer member 72, which will be described later.

Further, brake spring 71 is disposed in a state where barrel portion 71a is coaxially placed with rotating member 62 radially outside rotating member 62, while first arm portion 71b and second arm portion 71c are placed in a state of being respectively inserted into first groove portion 62b1 and second groove portion 62b2 of rotating member 62, as illustrated in FIG. 5.

That is, brake spring 71 is fittingly attached to the outside (radially outside) of rotating member 62 via first arm portion 71b and second arm portion 71c.

Outer member 72 is formed of a hollow cylindrical member, and its inner diameter is configured to be larger than the outer diameter of rotating member 62 and substantially the same as the outer diameter of barrel portion 71a of brake spring 71, as illustrated in FIG. 4.

Outer member 72 is coaxially placed with rotating member 62 radially outside rotating member 62, and fixed by holding member 52b so as not to rotate in the axial rotation direction.

Thus, brake spring 71 placed around rotating member 62 is fitted inside outer member 72 in a state where outer peripheral surface 71a1 of barrel portion 71 is in close contact with inner peripheral surface 72a of outer member 72, as illustrated in FIG. 5.

In other words, outer member 72 connecting to the supporting-device-side housing (holding member 52B, more specifically) is provided outside brake spring 71 (radially outside barrel portion 71a).

Then, brake spring 71 is held so as not to temporarily rotate relatively to driven-member-side spindle member 54 in the axial rotation direction by the friction with outer member 72.

Herein, inner peripheral surface 71a2 of barrel portion 71a has a gap between outer peripheral surface 62b of rotating member 62 (i.e., inner peripheral surface 71a2 of barrel portion 71a of brake spring 71 is not in close contact with outer peripheral surface 62b of rotating member 62) when, for example, neither of the energizing force of driving-device-side energizing member 13 and supporting-device-side energizing member 53 nor the drive of driving device 10 is applied to driven member 52A, and the force to rotate rotating member 62 in the axial rotation direction with driven-member-side spindle member 54 is not acting.

Thus, rotating member 62 is in a state of being able to slightly rotate in the axial rotation direction with driven-member-side spindle member 54 within a range where first arm portion 71b and second arm portion 71c of brake spring 71 do not make contact with the inner surfaces of first groove portion 62b1 and second groove portion 62b2 respectively.

Regulation mechanism 70 with such a configuration allows or restrains the relative movement of driven member 52A to holding member 52B according to the operating situations.

To be more specific, when the drive of driving device 10 is stopped, only the energizing force of driving-device-side energizing member 13 and that of supporting-device-side energizing member 53 are mainly applied to operating member 12A of driving device 10 and driven member 52A of supporting device 50 respectively.

Thus, only the energizing force of driving-device-side energizing member 13 and that of supporting-device-side energizing member 53 are transferred to driven member 52A to the forward direction side with respect to holding member 52B.

Note that the energizing force of driving-device-side energizing member 13 is transferred to driven member 52A via back door 101 as a movement object.

The energizing force transferred to driven member 52A is transferred to driven-member-side spindle member 54 via nut member 55 (see FIG. 4).

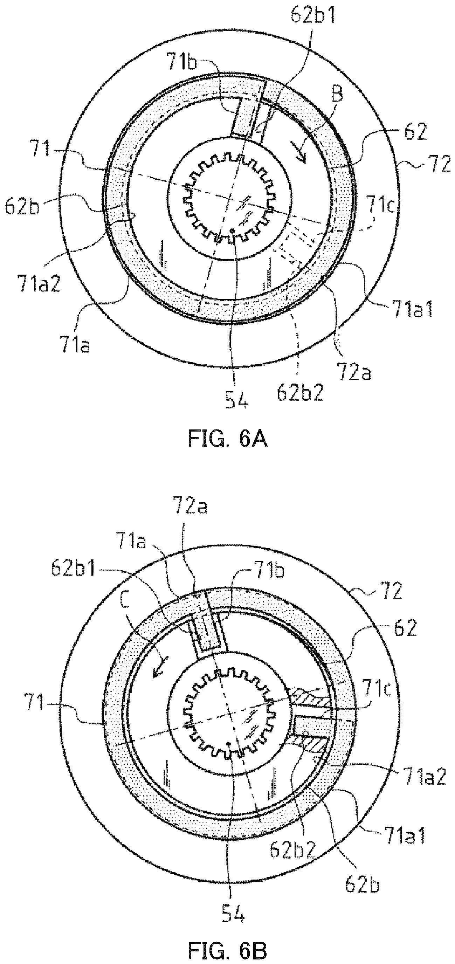

This rotates driven-member-side spindle member 54 to the predetermined side in the axial rotation direction (e.g., the arrow B direction side in FIG. 6A) with rotating member 62.

The rotation of rotating member 62 to the predetermined side in the axial rotation direction (the arrow B direction side) causes first groove portion 62b1 and second groove portion 62b2 to move to the predetermined side in the axial rotation direction.

Then, only the inner surface of first groove portion 62b1 immediately makes contact with first arm portion 71b of brake spring 71.

Subsequently, as illustrated in FIG. 6A, first arm portion 71b is engaged with first groove portion 62b1 and moved to the predetermined side in the axial rotation direction (the arrow B direction side) with rotating member 62. Rotating member 62 stops in a state where the energizing force transferred to driven-member-side spindle member 54 (rotating member 62) via driven member 52A and the elastic force of brake spring 71 are balanced.

In such a state, the inner diameter of barrel portion 71a of brake spring 71 is reduced only in the area of the first arm portion 71b side (hereinafter, referred to as "first area"), and inner peripheral surface 71a2 in the first area is in close contact with outer peripheral surface 62b of rotating member 62.

In the area of the second arm portion 71c side (hereinafter, referred to as "second area") of barrel portion 71a, in contrast, second arm portion 71c does not yet make contact with the inner surface of second groove portion 62b2 and does not move to the predetermined side in the axial rotation direction (the arrow B direction side). Outer peripheral surface 71a1 in the second area is thus maintained close contact with inner peripheral surface 72a of outer member 72.

As a result, the relative rotation of brake spring 71 to rotating member 62 in the axial rotation direction is restrained by the friction with rotating member 62 in the first area (the area of the first arm portion 71b side) of barrel portion 71a, and the relative rotation to outer member 72 in the axial rotation direction is restrained by the friction with outer member 72 in the second area (the area of the second arm portion 71c side) of barrel portion 71a.

That is, the rotation of rotating member 62 to the predetermined side in the axial rotation direction (the arrow B direction side) with respect to outer member 72 is restrained via brake spring 71.

As described above, when the drive of driving device 10 is stopped, regulation mechanism 70 restrains the relative movement of driven member 52A to holding member 52B due to the energizing force of driving-device-side energizing member 13 and that of supporting-device-side energizing member 53.

Meanwhile, when the drive of driving device 10 is stopped and the external force to move to the backward direction side in the axial direction with respect to holding member 52B is unexpectedly applied to driven member 52A exceeding the energizing force of driving-device-side energizing member 13 and that of supporting-device-side energizing member 53, for example, the external force is transferred to driven-member-side spindle member 54 via nut member 55.

This rotates driven-member-side spindle member 54 to the opposite side to the predetermined side in the axial rotation direction (e.g., the arrow C direction side in FIG. 6B) with rotating member 62.

The rotation of rotating member 62 to the opposite side to the predetermined side in the axial rotation direction (the arrow C direction side) causes first groove portion 62b1 and second groove portion 62b2 to move to the opposite side to the predetermined side in the axial rotation direction.

Then, first groove portion 62b1 is released from the engaged state with first arm portion 71b of brake spring 71, and only the inner surface of second groove portion 62b2 immediately makes contact with second arm portion 71c of brake spring 71.

Subsequently, as illustrated in FIG. 6B, second arm portion 71c is engaged with second groove portion 62b2 and moved to the opposite side to the predetermined side in the axial rotation direction (the arrow C direction side) with rotating member 62. Rotating member 62 stops in a state where the external force transferred to driven-member-side spindle member 54 (rotating member 62) via driven member 52A and the elastic force of brake spring 71 are balanced.

In such a state, the inner diameter of barrel portion 71a of brake spring 71 is reduced only in the second area described above (the area on the second arm portion 71c side), and inner peripheral surface 71a2 in the second area is in close contact with outer peripheral surface 62b of rotating member 62.

In the first area of barrel portion 71a (the area on the first arm portion 71b side) described above, in contrast, the inner diameter is restored and outer peripheral surface 71a1 is in close contact with inner peripheral surface 72a of outer member 72.

As a result, the relative rotation of brake spring 71 to rotating member 62 in the axial rotation direction is restrained by the friction with rotating member 62 in the second area of barrel portion 71a, and the relative rotation to outer member 72 in the axial rotation direction is restrained by the friction with outer member 72 in the first area of barrel portion 71a.

That is, the rotation of rotating member 62 to the opposite side to the predetermined side in the axial rotation direction (the arrow C direction side) with respect to outer member 72 is restrained via brake spring 71.

As described above, even when the external force to move to the backward direction side in the axial direction with respect to holding member 52B is unexpectedly applied to driven member 52A while the drive of driving device 10 is stopped, regulation mechanism 70 restrains the relative movement of driven member 52A to holding member 52B due to the external force.

Next, descriptions will be given of a case where driving device 10 drives.

When, for example, back door 101 is stopped in a closed state at the rear part of vehicle 100 as illustrated in FIG. 2, only the energizing force of driving-device-side energizing member 13 and that of supporting-device-side energizing member 53 are each mainly applied to driven member 52A, as described above.

Thus, rotating member 62 is in a state where the rotation to the predetermined side in the axial rotation direction (the arrow B direction side) with respect to outer member 72 is temporarily restrained via brake spring 71, as illustrated in FIG. 6A.

In such a state, when driving motor 11 of driving device is driven and operating member 12A is moved to the forward direction side in the axial direction with respect to holding member 12B, the driving force of driving motor 11 is transferred to driven member 52A via back door 101 as the force to move driven member 52A to the forward direction side in the axial direction with respect to holding member 52B.

The driving force of driving motor 11 transferred to driven member 52A is transferred to driven-member-side spindle member 54 via nut member 55 (see FIG. 4).

Herein, the driving force of driving motor 11 greatly exceeds the frictional force between outer peripheral surface 71a1 of barrel portion 71a of brake spring 71 in the second area (the area on the second arm portion 71c side) and inner peripheral surface 72a of outer member 72. This further rotates driven-member-side spindle member 54 to the predetermined side in the axial rotation direction (the arrow B direction side) with rotating member 62.

At this time, rotating member 62 is further rotated to the predetermined side in the axial rotation direction (the arrow B direction side) while sliding on inner peripheral surface 72a of outer member 72 via the second area (the area on the second arm portion 71c side).

As a result, first arm portion 71b of brake spring 71 is further moved to the predetermined side in the axial rotation direction (the arrow B direction side) with rotating member 62 while engaging with first groove portion 62b1. The inner diameter of barrel portion 71a of brake spring 71 is reduced in a whole area including the first area and the second area, and inner peripheral surface 71a2 makes close contact with outer peripheral surface 62b of rotating member 62.

In other words, the outer diameter of barrel portion 71a of brake spring 71 is reduced, and outer peripheral surface 71a1 of barrel portion 71a and inner peripheral surface 72a of outer member 72 are released from the close contact state, whereby rotating member 62 is in a rotatable state to the predetermined side in the axial rotation direction (the arrow B direction side) with respect to outer member 72.

Meanwhile, when, for example, back door 101 is stopped in an open state at the rear part of vehicle 100 as illustrated in FIG. 1, also only the energizing force of driving-device-side energizing member 13 and that of supporting-device-side energizing member 53 are each mainly applied to driven member 52A, as described above.

Thus, rotating member 62 is in a state where the rotation to the predetermined side in the axial rotation direction (the arrow B direction side) with respect to outer member 72 is temporarily restrained via brake spring 71, as illustrated in FIG. 6A.

In such a state, when driving motor 11 of driving device is driven and operating member 12A is moved to the backward direction side in the axial direction with respect to holding member 12B, the driving force of driving motor 11 is transferred to driven member 52A via back door 101 as the force to move driven member 52A to the backward direction side in the axial direction with respect to holding member 52B.

The driving force of driving motor 11 transferred to driven member 52A is transferred to driven-member-side spindle member 54 via nut member 55 (see FIG. 4).

This rotates driven-member-side spindle member 54 to the opposite side to the predetermined side in the axial rotation direction (the arrow C direction side) with rotating member 62.

The rotation of rotating member 62 to the opposite side to the predetermined side in the axial rotation direction (the arrow C direction side) causes first groove portion 62b1 and second groove portion 62b2 to move to the opposite side to the predetermined side in the axial rotation direction.

Then, first groove portion 62b1 is released from the engaged state with first arm portion 71b of brake spring 71, and only the inner surface of second groove portion 62b2 immediately makes contact with second arm portion 71c of brake spring 71.

Subsequently, as illustrated in FIG. 6B, second arm portion 71c is engaged with second groove portion 62b2 and moved to the opposite side to the predetermined side in the axial rotation direction (the arrow C direction side) with rotating member 62.

As a result, the relative rotation of brake spring 71 to rotating member 62 in the axial rotation direction is temporarily restrained by the friction with rotating member 62 in the second area of barrel portion 71a, and the relative rotation to outer member 72 in the axial rotation direction is restrained by the friction with outer member 72 in the first area of barrel portion 71a.

That is, the rotation of rotating member 62 to the opposite side to the predetermined side in the axial rotation direction (the arrow C direction side) with respect to outer member 72 is temporarily restrained via brake spring 71.

Herein, the driving force of driving motor 11 greatly exceeds the frictional force between outer peripheral surface 71a1 of barrel portion 71a of brake spring 71 in the first area (the area on the first arm portion 71b side) and inner peripheral surface 72a of outer member 72. This further rotates driven-member-side spindle member 54 to the opposite side to the predetermined side in the axial rotation direction (the arrow C direction side) with rotating member 62.

At this time, rotating member 62 is further rotated to the opposite side to the predetermined side in the axial rotation direction (the arrow C direction side) while sliding on inner peripheral surface 72a of outer member 72 via the first area (the area on the first arm portion 71b side).

As a result, second arm portion 71c of brake spring 71 is further moved to the opposite side to the predetermined side in the axial rotation direction (the arrow C direction side) with rotating member 62 while engaging with second groove portion 62b2. The inner diameter of barrel portion 71a of brake spring 71 is reduced in a whole area including the first area and the second area, and inner peripheral surface 71a2 makes close contact with outer peripheral surface 62b of rotating member 62.

In other words, the outer diameter of barrel portion 71a of brake spring 71 is reduced, and outer peripheral surface 71a1 of barrel portion 71a and inner peripheral surface 72a of outer member 72 are released from the close contact state, whereby rotating member 62 is in a rotatable state to the opposite side to the predetermined side in the axial rotation direction (the arrow C direction side) with respect to outer member 72.

As described above, the drive of driving device 10 enables driven member 52A to move to the forward direction side or the backward direction side in the axial direction with respect to holding member 52B, and regulation mechanism 70 allows driven member 52A to be driven to move following operating member 12A by the operating force of operating member 12A by driving device 10.

In regulation mechanism 70 with such a configuration, outer member 72 is provided at a position with respect to rotating member 62, the position restricting the rotation of brake spring 71 by the friction with brake spring 71 (outer peripheral surface 71a1 of barrel portion 71a in the present embodiment) when the drive of driving device 10 is stopped, and the position allowing the rotation of brake spring 71 by the rotation of rotating member 62 reducing the diameter of brake spring 71 (the outer diameter of barrel portion 71a in the present embodiment) when driving device 10 drives.

Note that the configuration of regulation mechanism 70 is not limited to the configuration described in the present embodiment.

That is, in regulation mechanism 70 in the present embodiment, brake spring 71 is in a state where the rotation is regulated by the friction with outer member 72 at least until the diameter of barrel portion 71a is reduced by the rotation of rotating member 62.

When, for example, rotating member 62 slightly rotates in the opposite direction and brake spring 71 is released from the force to reduce the diameter of barrel portion 71a, brake spring 71 is then immediately restored and the diameter of barrel portion 71a is enlarged.

As described above, brake spring 71 is configured to repeat the diameter enlargement and the diameter reduction of barrel portion 71a while the rotation is regulated by the frictional force with rotating member 62.

Thus, it is crucial for brake spring 71 to maintain the frictional force with rotating member 62 so as not to be reduced for a long period.

It is also crucial not to generate abnormal noise, for example, between brake spring 71 and rotating member 62.

From the above, with regard to the configuration of regulation mechanism 70, brake spring 71 may have a configuration that the rotation of rotating member 62 is restricted by barrel portion 71a making close contact with inner peripheral surface 72a of outer member 72 due to the diameter enlargement of barrel portion 71a, in place of the configuration in the present embodiment that the rotation of rotating member 62 is restricted by barrel portion 71a making close contact with outer peripheral surface 62b of rotating member 62 due to the diameter reduction of barrel portion 71a.

### [Effects of Present Embodiment]

As described above, object moving mechanism 1 in the present embodiment is an object moving mechanism including supporting device 50 that supports back door 101 as an example of movement object, and driving device 10 that moves back door 101 (the movement object).

Herein, driving device 10 includes driving motor 11 as an example of a driving section, operating member 12A that operates in forward and backward direction by the drive of driving motor 11 (the driving section), and driving-device-side energizing member 13 that energizes back door 101 (the movement object).

Further, supporting device 50 includes a connecting portion (third connecting portion 57, more specifically) that connects to operating member 12A via back door 101, driven member 52A that is driven by the operation of operating member 12A, supporting-device-side energizing member 53 that energizes driven member 52A, and regulation mechanism 70 that restrains or allows the movement of driven member 52A.

In addition, regulation mechanism 70 has a configuration that allows driven member 52 to be driven by the operating force of operating member 12A by the drive of driving device 10, and that restrains driven member 52 from being driven by the movement of operating member 12A with the energizing force of supporting-device-side energizing member 53.

With such a configuration, regulation mechanism 70 can restrict the movement of back door 101 (the movement object) even when the drive of driving device 10 is stopped during the movement of back door 101 (the movement object) by the combination of driving device 10 and supporting device 50.

In the present embodiment, regulation mechanism 70 is also configured to include brake spring 71 that generates braking force by increasing and decreasing frictional force due to the diameter enlargement and the diameter reduction.

Such a configuration enables regulation mechanism 70 to be compactly configured compared to a case of separately providing a braking device (a braking mechanism) composed of a complicated mechanism.

Incidentally, in the present embodiment, driving device 10 includes driving-device-side housing 12 provided with a connecting portion (first connecting portion 17, more specifically) that connects to back door 101 (the movement object), and driving motor 11 (the driving section) is provided in driving-device-side housing 12. Operating member 12A includes operating-member-side spindle member 14 that rotates by the drive of driving motor 11 (the driving section), nut member 15 that is screwed with operating-member-side spindle member 14, and moving member 16 that connects to nut member 15.

In addition, supporting device 50 includes supporting-device-side housing 52 provided with a connecting portion (third connecting portion 57, more specifically) that connects to back door 101 (the movement object), and driven member 52A includes rotatable driven-member-side spindle member 54, nut member 55 that is screwed with driven-member-side spindle member 54, and moving member 56 that connects to nut member 55.

Further, driven-member-side spindle member 54 is provided with rotating member 62 that rotates with driven-member-side spindle member 54, brake spring 71 is fittingly attached to the outside of rotating member 62, and the outside of brake spring 71 is provided with outer member 72 connecting to supporting-device-side housing 52.

Furthermore, outer member 72 is configured to be provided at a position with respect to rotating member 62, the position restricting the rotation of brake spring 71 by the friction with brake spring 71 when the drive of driving device 10 is stopped, and the position allowing the rotation of brake spring 71 by the rotation of rotating member 62 reducing the diameter of brake spring 71 when driving device 10 drives.

Configuring regulation mechanism 70 with outer member 72 with such a configuration eliminates the need for separately providing a complicated control program to electrically control, for example, and enables to control the operations of driving device 10 and supporting device 50 only by a simpler mechanical mechanism.

### Reference Signs List

- 1: Object moving mechanism
- 10: Driving device
- 11: Driving motor
- 11a: Driving shaft
- 12: Driving-device-side housing
- 12A: Operating member
- 12A1: Closed end surface
- 12A2: End portion
- 12A3: Inner space portion
- 12B: Holding member
- 12B1: Closed end surface
- 12B2: Partition portion
- 12B3: Closed-end-surface-side space portion
- 12B4: Open-surface-side space portion
- 13: Driving-device-side energizing member
- 14: Operating-member-side spindle member
- 14a: External thread portion
- 14b: End portion
- 15: Nut member
- 15a: Internal thread portion
- 15b: Protrusion portion
- 16: Moving member
- 17: First connecting portion
- 18: Second connecting portion
- 19: Space portion
- 19A: First space portion
- 19B: Second space portion
- 20: Rotation regulation member
- 20a: Recess portion
- 21: Bearing member
- 22: Coupling
- 50: Supporting device
- 52: Supporting-device-side housing
- 52A: Driven member
- 52B: Holding member
- 53: Supporting-device-side energizing member
- 54: Driven-member-side spindle member
- 54b: End portion
- 54b1: Protrusion portion
- 55: Nut member
- 56: Moving member
- 57: Third connecting portion
- 58: Fourth connecting portion
- 62: Rotating member
- 62a: Through-hole
- 62a1: Recess portion
- 62b: Outer peripheral surface
- 62b1: First groove portion
- 62b2: Second groove portion
- 70: Regulation mechanism
- 71: Brake spring
- 71a: Barrel portion
- 71a1: Outer peripheral surface
- 71a2: Inner peripheral surface
- 71b: First arm portion
- 71c: Second arm portion
- 72: Outer member
- 72a: Inner peripheral surface
- 100: Vehicle
- 101: Back door
- 102: Body

## Claims

1. An object moving mechanism, comprising:
a supporting device that supports a movement object; and
a driving device that moves the movement object, wherein:
the driving device includes:
a driving section;
an operating member that operates in a forward and backward direction by drive of the driving section; and
a driving-device-side energizing member that energizes the movement object,
and
the supporting device includes:
a connecting portion that connects to the operating member;
a driven member that is driven by operation of the operating member;
a supporting-device-side energizing member that energizes the driven member; and
a regulation mechanism that restrains or allows movement of the driven member, wherein
the regulation mechanism allows the driven member to be driven by operating force of the operating member by drive of the driving device, and restrains the driven member from being driven by movement of the operating member with energizing force of the supporting-device-side energizing member.

2. The object moving mechanism according to claim 1, wherein:
the regulation mechanism includes a brake spring that generates braking force by increasing and decreasing frictional force due to diameter enlargement and diameter reduction.

3. The object moving mechanism according to claim 2, wherein:
the driving device further includes a driving-device-side housing that is provided with a connecting portion connecting to the movement object,
the driving section is provided in the driving-device-side housing,
the operating member includes:
an operating-member-side spindle member that rotates by the drive of driving section;
a nut member that is screwed with the operating-member-side spindle member; and
a moving member that is connected to the nut member, and
the supporting device includes a supporting-device-side housing that is provided with the connecting portion connecting to the movement object,
the driven member includes:
a rotatable driven-member-side spindle member;
a nut member that is screwed with the driven-member-side spindle member;
and
a moving member that is connected to the nut member, and
the driven-member-side spindle member is provided with a rotating member that rotates with the driven-member-side spindle member,
the brake spring is fittingly attached to an outside of the rotating member, and
an outer member that is connected to the supporting-device-side housing and is provided outside of the brake spring, wherein
the outer member is provided at a position which restricts rotation, with respect to the rotating member, of the brake spring by friction with the brake spring when the drive of driving device is stopped, and which allows the rotation of the brake spring by reduction in diameter of the brake spring as a result of rotation of the rotating member when the driving device drives.
